# EUROPÄISCHE PATENTSCHRIFT

(11) **EP 3 807 127 B1**
(45) Veröffentlichungstag und Bekanntmachung des Hinweises auf die Patenterteilung: **03.05.2023**
(21) Anmeldenummer: 19726995.4
(22) Anmeldetag: 27.05.2019
(51) Int. Cl.: B60N 3/04, D04H 1/485, D04H 1/541, D04H 1/55, D04H 1/558, D04H 11/08

(54) **DREIDIMENSIONAL GEFORMTES NADELVLIES**
THREE-DIMENSIONALLY FORMED NEEDLE-PUNCHED NONWOVEN
NAPPE D'AIGUILLETÉ DE FORME TRIDIMENSIONNELLE

(30) Priorität: 13.06.2018 DE 102018114147
(43) Veröffentlichungstag der Anmeldung: 21.04.2021
(73) Patentinhaber: Adler Pelzer Holding GmbH, 58099 Hagen (DE)
(72) Erfinder: SINGH, Ray, 58332 Schwelm (DE); DICKERT, Matthias, 58454 Witten (DE); SCHULZE, Volkmar, 84069 Schierling (DE)
(74) Vertreter: Bittner, Bernhard
(86) Internationale Anmeldenummer: PCT/EP2019/063632
(87) Internationale Veröffentlichungsnummer: WO 2019/238399

(56) Entgegenhaltungen:
- EP-A1- 2 664 702
- DE-A1- 10 117 354
- JP-A- H10 245 760
- JP-A- 2002 002 352
- US-A1- 2008 014 817

## Beschreibung

Gegenstand der Erfindung ist ein Verfahren zur Herstellung eines dreidimensional geformten Nadelvlies- insbesondere eines Dilour-Teppichbodens eines Kraftfahrzeuges sowie der Teppichboden selbst mit einer geprägten Struktur der Sichtoberfläche.

Im Stand der Technik sind verschiedene Ausführungen von Teppich-Oberwaren bei Kraftfahrzeug-Bodenverkleidungen bekannt, nämlich insbesondere Tufting-, Dilour- und Flachnadelvlies-Teppiche. Bei Tufting-Teppichen wird insbesondere PA6.6, PA6, PP, rPA und PET, rPET sowie die bio-basierenden Polyamide (PA 5.10; PA 6.10); und bei den Dilour- und Flachnadelvlies-Teppichen PET, PET/PP, PP, PA/PET und rPET vorwiegend als Garn-/Fasermaterial eingesetzt.

Im Stand der Technik sind Verfahren zur Herstellung von Dilour-Teppichen bekannt, siehe unter anderem DE 44 09 771 A1, DE 29 00 935 C2 und DE 10 2008 026 968 A1.

Bei der Herstellung eines flachen Nadelvlieses werden Stapelfasern nach einer Vliesbildung mittels Krempel und Kreuzleger über vielfaches Vernadeln zwischen zwei Metallplatten verfestigt. In einem weiteren Arbeitsschritt, mittels nochmaliger Vernadelung in ein Bürstenband, kann aus diesem flachen Nadelvlies ein Dilournadelvlies erzeugt werden. Bei beiden Varianten ist es für eine gute Endfestigkeit notwendig, die Stapelfasen nach dem Vernadeln, thermisch oder chemisch einzubinden. Die Einbindung der Fasern erfolgt üblicherweise mittels geschäumten Latex oder Acrylat. Ein kombinierter Einsatz von Latex oder Acrylat und BiCo-Faser (coPET/PET-Bikomponentenfaser) ist in praxi ebenfalls üblich. Daneben wird die Einbindung auch ausschließlich über BiCo-Faser realisiert.

Des Weiteren sind bekannt: aufgestreutes PE, EVA/PE-Gemisch, aufextrudiertes PE, Folien, Heißkleber, thermoplastische Dispersionen und das Thermobonding (EP 1 598 476 B1).

Speziell in WO 2017/061970 A1 wird auf das Einbinden des Teppichs mittels Bikomponenten (BiCo)-Fasern eingegangen. Hier wird die Optimierung der (BiCo)-Faserfixierung durch den Einsatz spezieller Schlitzdüsen im Trockenofen beschrieben.

Verfahren und Vorrichtungen findet man im Stand der Technik unter anderem zum Prägen von Warenbahnen und Faserschichten im Allgemeinen; siehe hierzu US 6 332 996 B1, WO 2017/131597 A1, DE 10 2016 001 807 A1, DE 20 2007 016 063 U1, US 6 395 211 B1, US 4 682 942 A.

US 2 723 937 A legt dar, wie ein gewebter oder genähter, getufteter Stoff (Teppich) mit Klebematerial in Pulverform polseitig bestreut und dann mittels beheizten Walzen geprägt bzw. der Pol auf Grund verklebt wird. Weiterhin wird hierbei auf die Anwendung von Dampf verwiesen; um das Pulver (vorzugsweise ein thermoplastisches Harz) zu erweichen.

DE 101 17 354 A1 offenbart einen Nadelvlies-Bodenbelag aufweisend eine dreidimensionale Oberflächenstruktur, die durch thermofixierte Prägung erhalten wird.

Zum Prägen von Teppich-Oberwaren für / bei Kraftfahrzeug-Bodenverkleidungen findet man im Stand der Technik keine Ausführungen.

Alle im Stand der Technik beschriebenen Präge-Anwendungen, Verfahren und Vorrichtungen sowie Materialstrukturen betreffen keine Dilour-Teppiche für die Nutzung im Kraftfahrzeug oder deren Verformung zu Kraftfahrzeug-Bodenverkleidungen.

Insbesondere durch die Entwicklung von E-Kraftfahrzeugen sucht man im Design/Styling nach alternativen Lösungen in der verformbaren Teppichoberfläche, im Vergleich zum einfarbigen, glatten Dilour- und Tuftingteppich.

Bei Kraftfahrzeugen mit Hecktür (sogenannte Kombi oder SUV) und umklappbarer Rücksitzlehne trifft dieses Styling auch auf den Gepäckraum zu, denn bei geöffneter Hecktür und umgeklappten Rücksitzlehnen schaut man von hinten in den damit freigegebenen Innenraum des Kraftfahrzeuges. Beides, Gepäck- und Fahrgastraum, müssen dann ein einheitliches, in sich stimmiges Styling verkörpern.

Die Aufgabe der vorliegenden Erfindung besteht in der Bereitstellung eines dreidimensional geformten geprägten Nadelvlies-, insbesondere Dilour-Teppichbodens, der den Fahrgastraum von Kraftfahrzeugen dahingehend optisch und haptisch aufwertet, dass dieser eine "Wohnzimmer- / Wohlfühl-Atmosphäre" aufweist. Insbesondere besteht die Aufgabe der Erfindung darin, auf einem üblichen flachen (zweidimensionalen) Nadelvlies-, insbesondere Dilour-Teppich nach der Einbindung der Fasern und gegebenenfalls nach dem Scheren zunächst eine bleibende, strapazierfähige Prägung der Oberfläche aufzubringen, die anschließend einer Verformung zu einer dreidimensionalen Kraftfahrzeug- Bodenverkleidung standhält.

Die vorgenannte Aufgabe wird in einer ersten Ausführungsform gelöst durch ein Verfahren nach Patentanspruch 1. Dies betrifft ein Verfahren zur Herstellung eines dreidimensional geformten Nadelvlies-Teppichbodens eines Kraftfahrzeugs mit einer geprägten Struktur der Sichtoberfläche des Teppichbodens mit
(a) einer Grammatur des Teppichbodens im Bereich von 280 bis 700 g/m² PET-Fasern und
(b) mit einem Bikomponenten-(BiCo) -Faser-Anteil von 8 bis 25 Gew. %, bezogen auf das Gesamtgewicht der Fasermischung dadurch gekennzeichnet, dass man

in einem zweidimensionalen (flachen) Nadelvlies-Teppichboden ohne Unterschichten in einem Prägewerkzeug bei einer gegenüber Raumtemperatur erhöhten Temperatur eine Prägung der Oberfläche des Teppichbodens einbringt,
anschließend den geprägten Teppichboden in einer Thermo-Verformungs-Anlage mit einer oder mehreren Unterschichten kaschiert, dreidimensional verformt und gegebenenfalls in einem weiteren Schritt mit einer Isolation versieht.

Außerdem offenbart ist ein Verfahren zur Herstellung eines dreidimensional geformten Nadelvlies-Teppichbodens eines Kraftfahrzeugs mit einer geprägten Struktur der Sichtoberflache des Teppichbodens mit
(a) einer Grammatur des Teppichbodens im Bereich von 280 bis 700 g/m² PET-Fasern und
(b) mit einem Bikomponenten-(BiCo) -Faser-Anteil von 8 bis 25 Gew. %, bezogen auf das Gesamtgewicht der Fasermischung dadurch gekennzeichnet, dass man
einen zweidimensionalen (flachen) Teppichaufbau aus zu prägender Nadelvlies Teppich-Oberware und Unterschichten gemeinsam in einer Kontaktheizstation mit integriertem Prägewerkzeug erwärmt, wobei eine zur Teppichoberware gerichtete Werkzeughälfte ein zu prägendes Muster aufweist und die zu den Unterschichten gerichtete, plane Werkzeughälfte vollflächigen Kontakt mit dem zu erwärmenden Schichtverbund hat, anschließend in einem Verformungsschritt den Gesamtaufbau dreidimensional verformt und gegebenenfalls in einem weiteren Schritt mit einer Isolation versieht.

Erfindungsgemäß im Sinne der vorliegenden Erfindung wird ein Dilour-Teppichboden eingesetzt.

Bei einem Nadelvlies-, hier einem Dilour-Teppichboden ohne BiCo-Fasern kann keine bleibende Kontur/Prägung im Temperaturbereich zwischen Glasübergang und Schmelzen des Florfasermaterials erzeugt werden. Der verpresste Flor hält nicht auf dem Fasergrund bzw. der eingebundenen Fasergrundschicht.

Wird der Flor geschmolzen, ist zwar eine Prägung möglich. Allerdings wird das geprägte Material zu einem mehr oder weniger kompakten Kunststoff mit entsprechend negativen Eigenschaften verpresst, d.h. hohem Glanzgrad und geringem Dehnvermögen bis zur Rissbildung.

Das heißt, es muss stets ein Anteil von Bikomponenten (BiCo)-Fasern im Fasermix enthalten sein um den textilen Charakter des geprägten Bereiches zu wahren.

Kern der vorliegenden Erfindung ist somit das kontinuierliche oder diskontinuierliche Prägen eines zwingendermaßen Bikomponenten (BiCo)-Fasern enthaltenden oder mit Bikomponenten (BiCo)-Fasern und Latex bzw. Acrylat eingebundenen Nadelvlies-, Dilour- Teppichbodens, der nach der Prägung der Oberfläche folgend durch Thermoverformung zu einer erfindungsgemäßen Kraftfahrzeug- Bodenverkleidungen unter Beibehaltung der Prägung verformbar ist.

Ein erfindungsgemäß hergestellter Nadelvlies-, Dilour- Teppich unterscheidet sich von einem üblichen Nadelvlies-Teppich durch eine hochwertigere Optik und Haptik. Die im Oberbegriff des Anspruchs 1 genannten Gewichtsangabe der Menge an PET-Fasern entspricht den spezifizierten Qualitäts-Anforderungen der Automobilhersteller.

Ein Nadelvlies-, Dilour-Teppich im Sinne der vorliegenden Erfindung ist dadurch definiert, dass die Bodenverkleidungsoberfläche, genauer, die Sichtseite, unterschiedliche Prägemuster aufweisen kann, welche aus zum Beispiel Linien (parallel oder sich kreuzend, gerade oder wellenförmig, identische oder verschiedene Linienstärken), Dreiecken, Quadraten, Rechtecken, Rauten, Polygonen, Logos, Schriftzügen oder Kombinationen daraus aufgebaut sein können.

Das erfindungsgemäße Prägen erfolgt insbesondere inline, beispielsweise kontinuierlich mit einer Prägewalze und zum anderen diskontinuierlich mit einem Prägewerkzeug.

Besonders bevorzugt im Sinne der vorliegenden Erfindung wird die diskontinuierliche Prägung des Teppichbodens in einem Temperaturbereich von 140 bis 220°C und einer Prägezeit im Bereich von 20 bis 40 Sekunden vorgenommen. Bei Überschreitung der Prägetemperatur plastifizieren die Fasern; die Prägestellen erhalten eine glänzende, spröde und harte Fläche, die zum Brechen neigt. Bei Unterschreitung der Mindestprägetemperatur kommt es erst gar nicht zur Ausbildung einer Prägung; beziehungsweise die Prägung ist nicht bleibend, nicht strapazierfähig und verformungsstabil.

Ähnlich verhält es sich mit einem Über- oder Unterschreiten der Prägezeiten.

Das kontinuierliche Prägen erfolgt beispielsweise mit einer Walzen- oder Kalander-Anlage, bei der eine Walze eine Prägewalze ist, die wiederum unterschiedliche Prägemuster aufweisen kann, in einem Temperaturbereich von 140 bis 220°C, wobei die Fertigungsgeschwindigkeit im Bereich von 3 bis 8 m/min liegt. Anschließend wird dieser geprägte Teppichboden in herkömmlichen Thermo-Verformungs-Anlagen mit diversen Unterschichten kaschiert und verformt.

Die Walzen-oder Kalanderanlage ist zweckmäßiger Weise am Ausgang eines Trockenofens oder nach der Scheranlage inline bei der Teppichherstellung (Einbindungs-/Beschichtungs-/Scherprozess) angeordnet.

Es ist bei beiden Ausführungsformen darauf zu achten, dass die Steghöhen der jeweiligen Prägeanlage deutlich höher sind, als die Flor/Polhöhe des jeweiligen Teppichs.

Die erfindungsgemäße Bodenverkleidung selbst umfasst somit einen geprägten Nadelvlies-, vorzugsweise Dilour-Teppich, der mit einer oder mehreren Unterschichten versehen ist und gegebenenfalls rückseitig eine Isolation zur Karosserie aufweist.

In einer bevorzugten Ausführungsform der vorliegenden Erfindung entspricht der dreidimensional geformte und geprägte Nadelvlies-, insbesondere Dilour-Teppichboden den besonderen spezifizierten Qualitäts-Anforderungen der Automobilhersteller und weist eine Grammatur im Bereich von 280 bis 700 g/m² PET-Fasern mit einem Bikomponenten (BiCo)-Faser-Anteil von vorzugsweise 12 bis 20 Gew. %, bezogen auf das Gesamtgewicht der Fasermischung auf. Zusätzlich kann auch dieser Aufbau insbesondere mit einem Latex- oder Acrylat-Rücken mit einem Gewicht im Bereich von 50 bis 160 g/m² eingebunden sein.

Ein besonderer Vorteil der vorliegenden Erfindung besteht darin, auf einfachste technische Weise inline strukturierte Bodenverkleidungsoberflächen für die Automobilindustrie herzustellen.

Ausführungsbeispiel:
Ein Dilour-Teppichboden, 640 g/m² PET-Fasern mit 20 Gew. % handelsüblichen CoPET/PET Mantel-Kern-Bikomponenten (BiCo)-Fasern, bezogen auf das Gesamtgewicht der Fasermischung, wurde mittels eines üblichen Prägewerkzeuges, das eine Gitterstruktur 34mm x 34mm mit einer Stegbreite von 2mm aufweist und auf eine Temperatur von 200°C erwärmt war, geprägt. Der Prägedruck betrug ca. 5000 kg/m² und die Prägezeit 30 Sekunden.

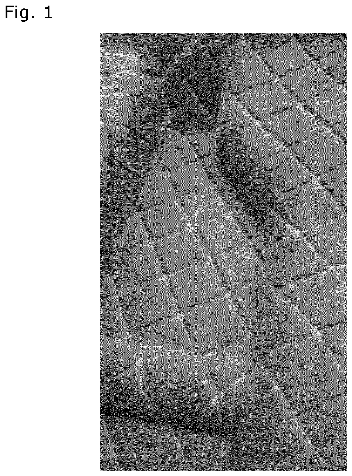

Anschließend wurde der geprägte Teppichboden in einer Labor-Thermoverformungsanlage mit einem 650 g/m² Mischfaservlies und einem zwischen geprägtem Teppich und Mischfaservlies angeordneten 60 g/m² PE-Klebevlies kaschiert und danach, mit einem Bodenverkleidungs-Labor-Werkzeug (Länge 600mm x Breite 400mm, Höhe vorne 120mm und Höhe hinten 70mm) verformt. Die Kaschiertemperatur betrug florseitig 90°C und vliesseitig 210°C, die Kaschierzeit 50 Sekunden; das Verformungswerkzeug hatte Raumtemperatur, die Werkzeugschließzeit betrug 60 Sekunden. In Fig. 1 ist ein Ausschnitt des verformten Teppichs, der Bodenverkleidung, dargestellt.

Deutlich ist die gute, bleibende Kontur und Kontur-Ausformung zu sehen.

Die Oberflächenbeurteilung nach Taber-Test (Prüfbedingungen in Anlehnung an DIN 53 754), d.h. das Verschleißverhalten, erfüllte die Spezifikation der Automobilhersteller.

In einem weiteren Ausführungsbeispiel wurde der oben beschriebene, geprägte Teppichboden in einer in der Serienproduktion befindlichen Thermo-Verformungsanlage mit einem VW-Tiguan Verformungswerkzeug verformt. In der Kaschierstation wurde der Teppich mit einem Recycling-Sandwichvlies von 900 g/m² und einer dazwischenliegenden PE/PA/PE Folie, 125 g/m², kaschiert (florseitig 95°C und vliesseitig 220°C, Kaschierzeit 50 Sekunden) und anschließend verformt (Werkzeugoberflächentemperatur zwischen 4 und 8°C, Werkzeugschließzeit 55 Sekunden).

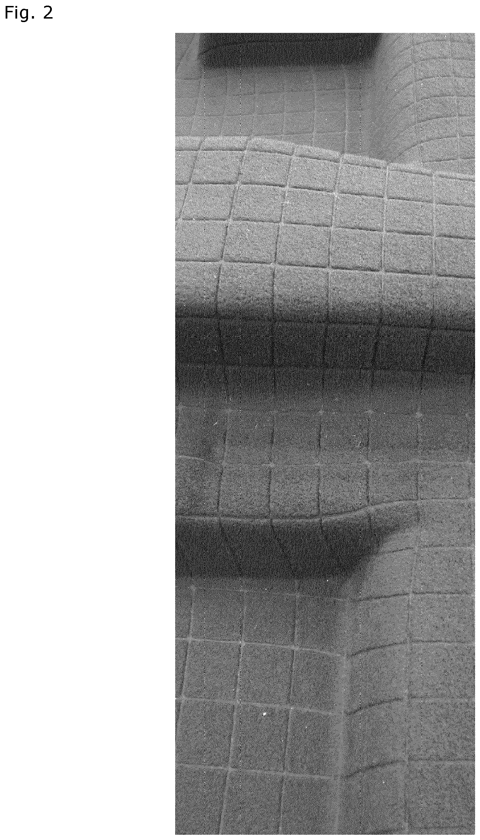

In Fig. 2 ist ein Ausschnitt des verformten Teppichs, der Bodenverkleidung, dargestellt.

Naturgemäß verziehen sich die geprägten Strukturen entsprechend den jeweiligen Ausziehgraden der Kontur der Bodenverkleidung. Das kennt man in praxi insbesondere von Bodenverkleidungen mit Tufting-Schlingenware.

Die Oberflächenbeurteilung nach Taber-Test (Prüfbedingungen in Anlehnung an DIN 53 754), d.h. das Verschleißverhalten, erfüllte die Spezifikation der Automobilhersteller.

## Patentansprüche

1. Verfahren zur Herstellung eines dreidimensional geformten Nadelvlies-Teppichbodens eines Kraftfahrzeugs mit einer geprägten Struktur der Sichtoberfläche des Teppichbodens mit
(a) einer Grammatur des Teppichbodens im Bereich von 280 bis 700 g/m² PET-Fasern und
(b) mit einem Bikomponenten-(BiCo) -Faser-Anteil von 8 bis 25 Gew.-%, bezogen auf das Gesamtgewicht der Fasermischung
**dadurch gekennzeichnet, dass** man als Nadelvlies-Teppichboden einen Dilour-Teppichboden einsetzt und in die Oberfläche des Teppichbodens ohne Unterschichten in einem Prägewerkzeug oder einer Prägewalze bei einer gegenüber Raumtemperatur erhöhten Temperatur eine Prägung der Oberfläche des Teppichbodens einbringt, anschließend den geprägten Teppichboden in einer Thermo-Verformungs-Anlage mit einer oder mehreren Unterschichten kaschiert und dreidimensional verformt.

2. Verfahren nach Anspruch 1, **dadurch gekennzeichnet, dass** man einen zweidimensionalen (flachen) Teppichaufbau aus zu prägender Nadelvlies Teppich-Oberware und Unterschichten gemeinsam in einer Kontaktheizstation mit integriertem Prägewerkzeug erwärmt, wobei eine zur Teppichoberware gerichtete Werkzeughälfte ein zu prägendes Muster aufweist und die zu den Unterschichten gerichtete, plane Werkzeughälfte vollflächigen Kontakt mit dem zu erwärmenden Schichtverbund hat und anschließend in einem Verformungsschritt den Gesamtaufbau dreidimensional verformt.

3. Verfahren nach einem der Ansprüche 1 bis 2, **dadurch gekennzeichnet, dass** man den Teppichboden in einem weiteren Schritt mit einer Isolation versieht.

4. Verfahren nach einem der Ansprüche 1 bis 3, **dadurch gekennzeichnet, dass** man die Prägung des Teppichbodens in einem Temperaturbereich von 140 bis 220°C diskontinuierlich bei einer Prägezeit im Bereich von 20 bis 40 Sekunden oder kontinuierlich bei einer Fertigungsgeschwindigkeit von 3 bis 8 m/min vornimmt.

5. Dreidimensional geformter Nadelvlies-Teppichboden eines Kraftfahrzeugs mit einer geprägten Struktur der Sichtoberfläche des Teppichbodens mit
(a) einer Grammatur des Teppichbodens im Bereich von 280 bis 700 g/m² PET-Fasern und
(b) mit einem Bikomponenten-(BiCo) -Faser-Anteil von 8 bis 25 Gew.-%, bezogen auf das Gesamtgewicht der Fasermischung
**dadurch gekennzeichnet, dass**
der Nadelvlies-Teppichboden einen Dilour-Teppichboden umfasst.

6. Dreidimensional geformter Nadelvlies-Teppichboden nach Anspruch 5 mit
(b) einem Bikomponenten-(BiCo) -Faser-Anteil von 12 bis 20 Gew.-%, bezogen auf das Gesamtgewicht der Fasermischung.

## Claims

1. Method of manufacturing a three-dimensionally shaped needlefelt carpet of a motor vehicle with an embossed structure of the visible surface of the carpet with
(a) a grammage of the carpet in the range of 280 to 700 g/m² PET fibers and
(b) with a bicomponent (BiCo) fiber content of 8 to 25% by weight, based on the total weight of the fiber blend,
**characterized in that** a dilour carpet is used as needlefelt carpet and an embossing of the surface of the carpet is introduced into the surface of the carpet without underlayers in an embossing tool or an embossing roller at a temperature increased with respect to room temperature, then the embossed carpet is laminated with one or more underlayers in a thermoforming unit and three-dimensionally formed.

2. Method according to claim 1, **characterized in that** a two-dimensional (flat) carpet structure consisting of needlefelt carpet upper fabric to be embossed and underlayers is heated together in a contact heating station with integrated embossing tool, wherein a tool half directed towards the carpet upper fabric has a pattern to be embossed and the flat tool half directed towards the underlayers has full-surface contact with the layered composite to be heated and then the entire structure is three-dimensionally deformed in a deformation step.

3. Method according to one of the claims 1 to 2, **characterized in that** the carpet is provided with insulation in a further step.

4. Method according to any one of claims 1 to 3, **characterized in that** the embossing of the carpet is carried out discontinuously in a temperature range of 140 to 220°C at an embossing time in the range of 20 to 40 seconds or continuously at a production speed of 3 to 8 m/min.

5. Three-dimensionally shaped needlefelt carpet of a motor vehicle with an embossed structure of the visible surface of the carpet having
(a) a grammage of the carpet in the range of 280 to 700 g/m² PET fibers and
(b) with a bicomponent (BiCo) fiber content of 8 to 25% by weight, based on the total weight of the fiber blend,
**characterized in that**
the needlefelt carpet includes a dilour carpet.

6. Three-dimensionally shaped needlefelt carpet according to claim 5 with
(b) a bicomponent (BiCo) fiber content of 12 to 20% by weight, based on the total weight of the fiber blend.

## Revendications

1. Procédé de fabrication d'un tapis de sol en nappe d'aiguilleté de forme tridimensionnelle d'un véhicule à moteur avec une structure gaufrée de la surface visible du tapis de sol avec
(a) un grammage du tapis de sol dans la plage de 280 à 700 g/m² de fibres en PET, et
(b) avec une proportion de fibres à deux composants (BiCo) de 8 à 25 % en poids par rapport au poids total du mélange de fibres,
**caractérisé en ce qu'**on utilise en tant que tapis de sol en nappe d'aiguilleté un tapis de sol en Dilour et on pratique, dans la surface du tapis de sol sans couches inférieures, un gaufrage de la surface du tapis de sol à une température élevée par rapport à la température ambiante dans un outil de gaufrage ou un cylindre de gaufrage, puis on contrecolle le tapis de sol gaufré dans une installation de thermoformage d'une ou de plusieurs couches inférieures et on le façonne de manière tridimensionnelle.

2. Procédé selon la revendication 1, **caractérisé en ce qu'**on réchauffe une structure de tapis (plate) bidimensionnelle composée d'un textile supérieur de tapis en nappe d'aiguilleté à gaufrer et de couches inférieures conjointement dans un poste de chauffage par contact avec un outil de gaufrage intégré, dans lequel une moitié d'outil dirigée vers le textile supérieur de tapis présente un motif à gaufrer et la moitié d'outil plane dirigée vers les couches inférieures est totalement en contact avec le composite stratifié à réchauffer puis on façonne de manière tridimensionnelle l'ensemble de la structure dans une étape de formage.

3. Procédé selon l'une quelconque des revendications 1 à 2, **caractérisé en ce qu'**on dote le tapis de sol d'une isolation dans une autre étape.

4. Procédé selon l'une quelconque des revendications 1 à 3, **caractérisé en ce qu'**on réalise le gaufrage du tapis de sol dans une plage de températures de 140 à 220 °C de manière discontinue lors d'un temps de gaufrage dans la plage de 20 à 40 secondes ou en continu à une vitesse de production de 3 à 8 m/min.

5. Tapis de sol en nappe d'aiguilleté de forme tridimensionnelle d'un véhicule à moteur avec une structure gaufrée de la surface visible du tapis de sol avec
(a) un grammage du tapis de sol dans la plage de 280 à 700 g/m² de fibres en PET, et
(b) avec une proportion de fibres à deux composants (BiCo) de 8 à 25 % en poids par rapport au poids total du mélange de fibres,
**caractérisé en ce que**
le tapis de sol en nappe d'aiguilleté comprend un tapis de sol en Dilour.

6. Tapis de sol en nappe d'aiguilleté de forme tridimensionnelle selon la revendication 5 avec
(b) une proportion de fibres à deux composants (BiCo) de 12 à 20 % en poids par rapport au poids total du mélange de fibres.
